# EUROPEAN PATENT SPECIFICATION

(11) **EP 0 958 451 B1**
(45) Date of publication and mention of the grant of the patent: **10.04.2002**
(21) Application number: 97950341.4
(22) Date of filing: 31.12.1997
(51) Int. Cl.: F02F 1/42, F02B 23/10

(54) **DIRECT INJECTION SPARK IGNITION ENGINE**
DIREKTEINGESPRITZTER FEUNKGEZÜNDETER MOTOR
MOTEUR A ALLUMAGE COMMANDE ET A INJECTION DIRECTE

(30) Priority: 01.02.1997 GB 9702109; 13.06.1997 GB 9712203
(43) Date of publication of application: 24.11.1999
(73) Proprietor: Ford Global Technologies, Inc., Dearborn, Michigan 48126 (US)
(72) Inventor: MA, Thomas, Tsoi, Hei, Chelmsford, Essex CM3 5BY (GB)
(74) Representative: Messulam, Alec Moses
(86) International application number: GB9703555
(87) International publication number: WO9834024

(56) References cited:
- EP-A- 0 661 431
- WO-A-84/02744
- DE-C- 932 392
- US-A- 5 211 147
- US-A- 5 421 301
- PATENT ABSTRACTS OF JAPAN vol. 013, no. 006 (M-781), 9 January 1989 & JP 63 215817 A (MAZDA MOTOR CORP), 8 September 1988,

## Description

The present invention relates to a spark ignition internal combustion engine having direct injection of liquid fuel into each engine cylinder.

WO 84/02744 describes a system in which a fuel injector is positioned to spray fuel directly towards the centre of the combustion chamber and a spark plug is positioned in close proximity of the fuel injector in the path of the fuel spray. In this prior art system, fuel is injected by the same injector in two stages, a first major portion of the fuel being injected at the start of the intake stroke to be atomised and vaporised to form a substantially homogeneous premixed charge, and a second smaller portion being injected late in the compression stroke just prior to ignition to remain close to the injector tip to enrich the mixture adjacent the spark plug, thus producing a powerful ignition kernel for igniting the premixed charge once this portion of fuel is ignited by the spark and burnt thereafter.

A serious problem encountered in the above system is that the spark plug is prone to fouling because it is in the path of the major portion of fuel being injected during the first injection and unavoidably it is wetted by the prolonged fuel spray. This could cause cold start problems, unstable ignition and eventually complete misfires.

Another known problem that can cause fouling of the spark plug if the spark plug electrodes are positioned in the path of the fuel spray is the small quantity of unatomised fuel that comes out of the fuel injector ahead of the fuel spray as soon as the injector valve is open. This is a consequence of the tip volume of the fuel injector storing some fuel downstream of the injector valve which is pushed out at the beginning of each injection, this being referred to as the "sac volume". Such a packet of liquid fuel, if allowed to hit the spark plug electrodes, could wet the electrodes before the main spray arrives.

With a view to mitigating the foregoing disadvantages, the invention provides in accordance with a first aspect a spark ignition internal combustion engine having a variable volume combustion chamber defined by a cylinder head, a cylinder bore and a piston reciprocating within the cylinder bore, the cylinder head having a spark plug and intake and exhaust ports leading through intake and exhaust valves into the combustion chamber, the engine also having a fuel supply for producing a substantially homogeneous premixed charge of fuel and air in the combustion chamber towards the end of the compression stroke, wherein means are provided to produce a powerful ignition kernel for igniting the premixed charge, the means comprising a fuel injector for injecting liquid fuel directly into the combustion chamber, the fuel injector being positioned in an unswept part of the cylinder bore and oriented to spray fuel obliquely towards the front face of an intake valve when the intake valve is closed such that the fuel is deflected from or along the surface of the intake valve in the direction of the spark plug, and an engine management system for generating a spark at the spark plug electrodes at a predetermined spark timing in the engine cycle, and for operating the fuel injector in a predetermined prior phase relationship with the spark timing to direct towards the vicinity of the spark plug electrodes a small quantity of fuel only sufficient to generate at the time of spark a localised region of readily ignitable mixture having its centre in the immediate vicinity of the spark plug electrodes, the resulting ignition of the localised ignitable region by the spark and the combustion thereof producing the powerful ignition kernel for igniting the premixed charge in the combustion chamber.

In accordance with a second aspect of the invention, there is provided a method of operating a spark ignition internal combustion engine having a variable volume combustion chamber defined by a cylinder head, a cylinder bore and a piston reciprocating within the cylinder bore, the cylinder head having a spark plug and intake and exhaust ports leading through intake and exhaust valves into the combustion chamber, the engine also having a fuel supply for producing a substantially homogeneous premixed charge of fuel and air in the combustion chamber towards the end of the compression stroke, and a fuel injector for injecting liquid fuel directly into the combustion chamber positioned in an unswept part of the cylinder bore and oriented to spray fuel obliquely towards the front face of an intake valve when the intake valve is closed such that the fuel is deflected from or along the surface of the intake valve in the direction of the spark plug, in which method, a small quantity of fuel that is only sufficient to generate at the time of ignition a localised region of readily ignitable mixture in the immediate vicinity of the spark plug is injected by means of the said injector in a predetermined prior phase relationship with the engine spark timing, the resulting ignition and combustion of the localised ignitable region producing a powerful ignition kernel for igniting the premixed charge in the combustion chamber.

The invention mitigates at least some of the problems discussed.above by allowing only a small quantity of fuel to be directed towards the spark plug just sufficient to produce an ignitable kernel, any additional major portion of fuel necessary for producing power is introduced by alternative means not directed at the spark plug. Furthermore even the small quantity of fuel introduced towards the spark plug is delivered indirectly by arranging the fuel spray to impinge on the surface of the intake valve such that the sac volume quantity and any other larger fuel droplets will spread on the surface allowing only fine droplets and fuel vapour to reach the spark plug.

Because the fuel droplets ejecting from the fuel injector are initially moving faster than the surrounding air, they entrain the air and produce micro turbulence which is known to enhance combustion.

Preferably the fuel spray from the fuel injector has a small conical angle and is directed at a shallow angle with the surface of the intake valve such that sufficient air is entrained by the fuel droplets in close proximity of the surface and the spark plug to form a compact and turbulent mixture cloud which burns rapidly once it is ignited. This ensures that a powerful ignition kernel is produced capable of igniting even a lean premixed charge in the bulk of the combustion chamber. Typically the fuel spray should have a cone angle of between 20° and 30°.

While only a small portion of the fuel is introduced by the fuel injector to generate an ignitable mixture in the vicinity of the spark plug electrodes without wetting the spark plug electrodes, the major portion of the fuel necessary for producing power may be introduced using another fuel injector. In this case, the other fuel injector may be located either in the combustion chamber with its spray directed away from the spark plug or in an intake port leading to the combustion chamber, the injector being operated to spray fuel into the air charge during or prior to the intake stroke to allow sufficient time for the fuel to mixed homogeneously with the intake air charge.

As an alternative, it is possible to use the same fuel injector to introduce also the major portion of the fuel necessary for producing power without wetting the spark plug by suitably positioning the injector in the combustion chamber and timing a separate earlier injection to coincide with the opening of the intake valve. In this case, if the fuel spray is directed to intercept the air curtain surrounding the intake valve and/or pass through the mouth of the open intake valve directly back into the end of the intake port, then it will be carried by the air stream away from the spark plug and avoid flooding the electrodes of the spark plug.

In prior art direct injection engines aiming to create a distributed stratified charge for combustion to produce power, the fuel injection timing is the primary control parameter which must be selected to give the best compromise between regions of under-mixing (excessively rich) and regions of over-mixing (excessively lean) of the fuel spray in air to give, on average for the whole charge, stable and clean combustion once it is ignited. The spark timing in this case is a secondary control parameter in that whilst there will always be a spark that would ignite the charge, its timing is closely tied to the fuel injection timing and there is little room for adjustment once the fuel injection timing has been fixed. The present invention aims to create a localised stratified charge only for ignition, in order to produce a more powerful ignition kernel which in turn ensures complete combustion of the premixed main charge. Because the main charge is substantially homogeneous, i.e., thoroughly mixed, this allows the priority to be reversed and enables the spark timing to be set at will. No matter when the engine management system determines the spark should occur, provided that the directly aimed injection of the present invention is used to create a localised ignitable cloud centred in the vicinity of the spark plug electrodes to coincide with the timing of the spark, then reliable ignition will be achieved and a powerful ignition kernel will ensue. This means always initiating the fuel injection a short time before the desired spark timing, the phase difference allowing for the time it takes for fuel to reach the vicinity of the spark plug following the operation of the injector. The duration of operation of the fuel injector will generally be short as only a brief puff of fuel is required to ensure ignitability and avoid flooding the spark plug electrodes.

In essence the combined fuel injection and spark timings of the present invention can be regarded as a timed plasma generator that can be fired at will at any instant in the engine cycle to ignite the main charge which in itself may not be ignitable by means of a spark alone.

In prior art stratified charge engines, the spark timing is restricted to a narrow window in order to achieve stable ignition taking into account the fuel mixing process already optimised by the fuel injection timing. The resulting ignition timing, though optimum for best ignition stability under the circumstances, is however not automatically also optimum for best thermodynamic efficiency nor lowest exhaust emissions. Because stable ignition must be the first priority, the other requirements would have to be compromised. The present invention reduces the dependence on the fuel mixing process, which is least sensitive in a directly aimed fuel spray only for ignition, thus significantly widening the spark timing window for stable ignition and allowing the ignition timing to be positioned almost at will for optimisation of different criteria.

In normal engine operation, the ignition timing will generally be optimised for maximum thermodynamic efficiency. This is common practice with homogeneous charge engines by varying the spark timing. The invention allows the same flexibility in selecting the ignition timing for maximum thermodynamic efficiency by varying the combined fuel injection and spark timings.

Depending on the engine operating conditions, other criteria may be allocated a higher priority than maximising thermodynamic efficiency. For example after cold starts, it is more important to minimise the light-off time of a catalyst in the exhaust system in order to meet legal emissions requirements. In this case, the invention allows the ignition timing to be retarded, even when operating with an overall lean mixture, to maximise the exhaust gas temperature when idling after a cold start.

In a similar vein, it has been proposed to reduce exhaust emissions when operating at light loads with a very lean mixture by inducing controlled auto-ignition in a homogeneous charge. This was previously achieved by increasing the charge temperature and pressure using preheating and/or high compression ratios. The invention can, if desired, be used to allow the ignition timing to be advanced to such an extent as to cause auto-ignition in the remaining lean charge.

The invention will now be described further, by way of example, with reference to the accompanying drawings, in which:
Figure 1 is a section through a cylinder of an engine of the invention, taken along the segmented section line I-I in Figure 2 during the intake stroke,
Figure 2 is a view of the combustion chamber in Figure 1 looking from the piston towards the cylinder head,
Figure 3 is a similar section to that of Figure 1 showing the piston near the top of the compression stroke, and
Figure 4 is a view of the combustion chamber in Figure 3 looking from the piston towards the cylinder head.

The engine in the drawings has a variable volume combustion chamber 10 defined between a piston 16 reciprocating in a bore 14 and a cylinder head 12 having intake ports 20 and exhaust ports 30. The intake ports 20 are controlled by two intake poppet valves having stems 24 and heads 26 and the exhaust ports 30 are controlled by two exhaust poppet valves having stems 34 and heads 36. A spark plug 40 having a spark gap 42 is located centrally in the cylinder head 12.

The engine is controlled by a management system that comprises a so-called EEC (Electronic Engine Control) unit 60. The EEC unit 60 is connected to receive signals from various sensors that measure the relevant operating parameters such as engine speed, load, temperature and crankshaft position and appropriately controls the ignition timing, the fuel quantity and the fuel injection timing in accordance with stored algorithms and calibration data.

Conventional design would place a high pressure direct fuel injector in the cylinder head pointing downwards away from the spark plug electrodes and towards the piston 16. It is such a geometry that is responsible for the wetting of the piston crown that in turn causes soot and hydrocarbon emissions. In the described preferred embodiment of the present invention, a fuel injector 50 controlled by the EEC unit 60 is located in the cylinder bore 14 at the periphery of the combustion chamber. In this position the injector 50 lies above the top piston ring in its top-dead-centre position, that is to say above the swept volume of the cylinder and in a permanently exposed position.

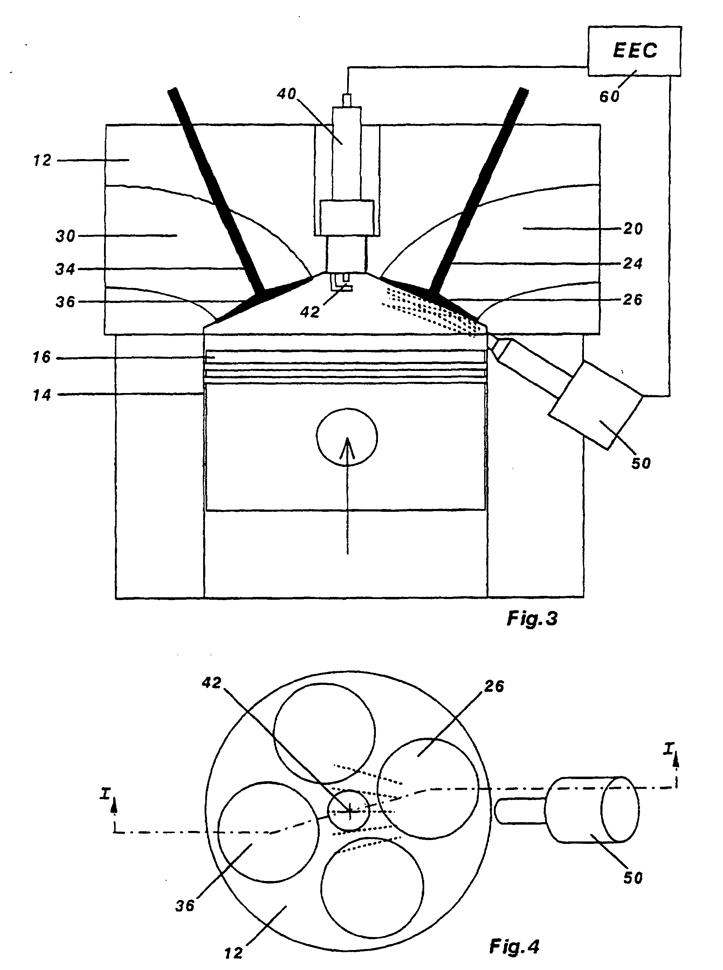

The orientation of the injector 50 and the design of its nozzle are such that the fuel spray of the injector is relatively narrow and is directed towards the spark plug 40. While this may be achieved by aiming the fuel spray directly towards the spark gap 42, it is preferred to direct the injector 50, in the manner illustrated in Figure 3 of the drawings, such that the fuel spray impinges on the surface of the intake valve 26 and is deflected by this surface towards the spark gap 42. This reduces the risk of wetting the spark plug electrodes by allowing only fine droplets and fuel vapour to reach the spark gap 42.

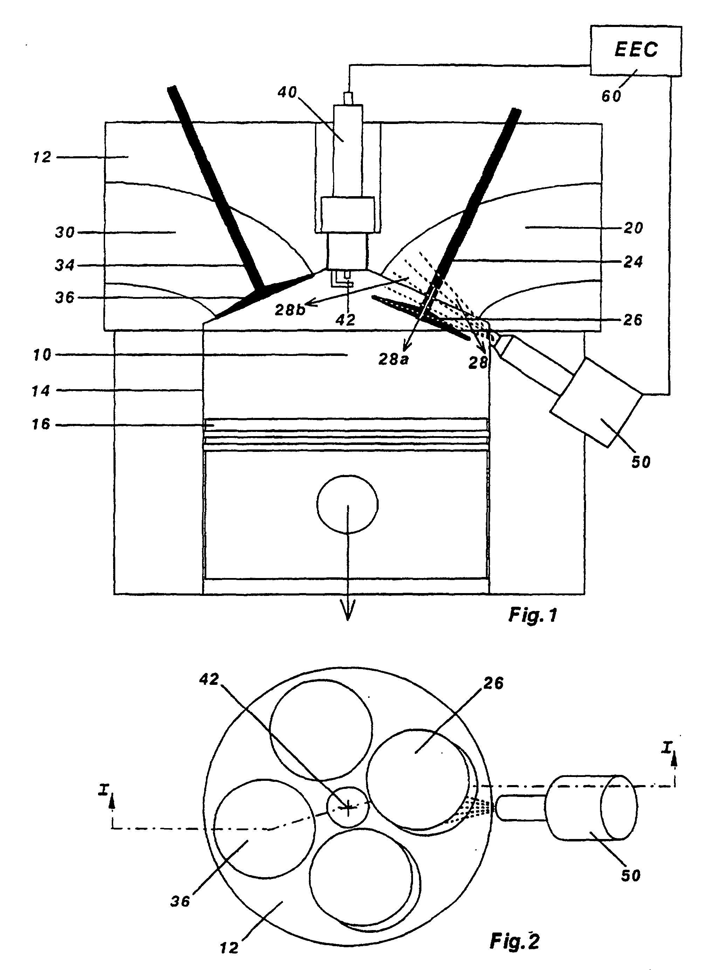

With the same orientation of the injector 50, when the intake valve 26 is open, the injector 50 is also aimed through the mouth of the open intake valve 26 directly into the end of the intake port 20 to intercept the air curtain flowing at high speed in the opposite direction as represented by the arrows 28 in Figures 1. Hence as shown in Figure 1 when fuel is injected during the intake stroke, the spray attempts to pass through the open intake valve 26 back into the end of the intake port 20. The bulk of the spray does not however land on the back of the intake valve 26 nor on the wall of the intake port 20 because the air 28 being drawn into the cylinder at high speed in the opposite direction will carry the fine spray with it into the combustion chamber 10. The extent of impingement of fuel droplets onto the rear surface of the valve 26 and the wall of the intake port 20 will be minimal because of the small wall area directly exposed to the spray and the fine atomisation of the spray by the high pressure fuel injector.

The fuel injector 50 is typically operated at a pressure of 50 kg/cm² which results in fine droplets of 20 to 40 microns in diameter and droplet speed in still air of around 40 m/s. The air curtain 28 meeting the fuel spray in the opposite direction is typically travelling at a comparable speed which gives a relative velocity of around 80 m/s when the fuel droplets meet the air. Because of the fine atomisation of the spray and the high relative velocity of the air, the viscous drag on the fuel droplets is very high and the rate of evaporation of the droplets is intense, the combined effect causing the droplets to follow the air intimately and diminish in size very rapidly. It is for this reason that the droplets rapidly change directions and are entrained back into the combustion chamber 10. Such droplets that do succeed, by virtue of their larger size and speed, to penetrate into the intake port 20 will have been slowed down, evaporated and reduced in size dramatically and only a minimal proportion will reach the opposite wall of the intake port 20. Most of the droplets will remain airborne across the through flow cross-section of the intake port 20 and are entrained laterally by the air through flow, exiting with the air curtain 28, 28a, 28b surrounding the skirt of the intake valve 26.

Any impingement of the fuel spray on the rear face of the intake valve 26 and the side of the valve stem 24 can be avoided by designing the fuel injector nozzle with a narrow spray angle and aligning the fuel spray in an offset position from the valve stem 24 such that it directly penetrates across the through-flow cross-section of the intake port 20 as shown in Figures 1 and 2, without wetting the intake valve 26.

Wetting of the intake valve is not desirable for several reasons. First, the rate of evaporation of the liquid fuel film is significantly slower than that of very fine fuel droplets because of the much smaller surface area. Second, any liquid fuel film accumulating on the intake valve could cause fuel calibration delay problems during cold start and transient operating conditions. Third, the heat of evaporation of the fuel film is drawn from the intake valve and not from the intake air as in the case of dispersed fine droplets, resulting in lesser cooling of the intake air charge and lesser associated improvements in volumetric efficiency and knock tolerance compared with evaporation in air. The preferred embodiment of the invention ensures that substantially all the fuel injected back into the intake port 20 while the intake valve 26 is open is dispersed within the air and delivered into the combustion chamber 10 in the same engine cycle, homogeneously distributed throughout the intake charge.

As so far described the preferred embodiment of the invention provides an improvement over conventional direct injection engines in which the injector is aimed towards the piston, as it avoids wetting of the piston. It does not yet enable the engine to be optimised for ultra lean burn because the charge is homogeneous and may not be ignitable. To optimise lean burn, one needs to stratify the charge so that an ignitable cloud is present near the spark even though the bulk of the charge does not have sufficient fuel concentration to be ignitable on its own.

In the invention, such charge stratification is achieved when required in an engine with the illustrated injector geometry by separately introducing a proportion of the desired total fuel quantity into the combustion chamber while the intake valve is closed near the end of the compression stroke, as shown in Figures 3 and 4. This injection is timed by the EEC unit 60 that also sets the spark timing in such a manner that an ignitable cloud of fuel and air will be present in the vicinity of the spark gap 42 at the instant that a spark is fired. The fuel injection occurs a brief period before the spark, to allow for the time taken for fuel to reach the vicinity of the spark plug after operation of the injector. This separately injected proportion of the fuel, which need only be a very small amount, will either pass over the head of the intake valve 26 or be deflected by the front face of the intake valve 26 and create a rich cloud near the spark gap 42 as shown in timed sequence in Figures 3 and 4 respectively. Even if the remainder of the charge is too lean to be ignitable, this cloud will be ignitable and once it has been ignited, a powerful ignition kernel will be created from which the flame will propagate to consume the entire charge.

The duration of fuel injection of the high pressure fuel injector during the intake stroke is typically in the range of 0.4 to 4.0 ms depending on engine load. At 4000 rpm engine speed, this corresponds to a maximum of 100 crank degrees out of an intake valve opening period of typically 240 crank degrees, making it entirely feasible to time the duration of the early injection of the major portion of the fuel to coincide with the period of maximum valve lift and maximum intake air velocity. The duration of the late injection of the small portion of the fuel towards the end of the compression stroke, on the other hand, should be as short as possible in order to avoid wetting the spark plug electrodes. This is typically in the order of 0.3 ms which is the shortest useable and repeatable duration within the design capability of the current high pressure fuel injector.

Under idling condition, the late injection near the end of the compression stroke could supply all the fuel needed. Under part load conditions, a combination of early and late injections can be used to achieve an overall lean mixture with a rich cloud next to the spark plug. Under high load conditions, one can dispense with the late injection and rely on a stoichiometric homogeneous charge achieved only by early injection.

Put differently, the engine can be operated at any time normally with a homogeneous stoichiometric mixture and a conventionally timed spark. For fuel economy during idling and part load conditions, the mixture strength can be reduced and this can be tolerated up to a certain lean burn limit with conventional ignition and fuelling strategy. The preferred embodiment of the invention allows the lean burn limit to be extended beyond this point whenever it is required by switching to a different mode in which a powerful ignition kernel is created by directing a brief puff of fuel towards the spark plug by means of a timed injection shortly before the normal spark.

It is important to note that the injector should be positioned at a sufficient distance from the spark plug for the above brief puff of fuel to vaporise before reaching the vicinity of the spark gap. Typically, the distance of the injector from the spark plug should correspond to a transit time of the fuel droplets amounting to several milliseconds. This precludes the injector from being mounted immediately adjacent the spark plug and the design of the combustion chamber dictates that the injector should be positioned at or near the periphery of the cylinder bore.

It should also be noted that even when operating at the limit of its lean burn capability, the bulk of the cylinder charge is homogeneously mixed and the only charge stratification that occurs is the result of the small local ignitable cloud near the spark gap forming a powerful ignition kernel. Thus once ignition has commenced, the flame propagates from the kernel and across a homogeneously mixed main charge, producing a lean burn exhaust emission characteristics which correspond to extrapolations of the typical curves obtained with homogeneous charge lean combustion, in which the NOₓ emissions continue to reduce as the homogeneous mixture strength is reduced.

This is to be contrasted with direct injection engines in which the entire charge is progressively stratified. Such engines typically have excessively rich combustion regions that result in the production of soot and high level of NOx and excessively lean combustion regions that result in high level of unburnt hydrocarbons because of incomplete combustion. The improvement in exhaust emissions of the present invention compared with engines in which the entire charge is progressively stratified would significantly reduce the burden on the exhaust after-treatment system necessary to meet legal emissions standards, while retaining similar fuel economy benefits.

Because the bulk of the charge is homogeneous, all known techniques for enhancing combustion such as increasing swirl, tumble or turbulence can be used in an engine of the present invention.

Though the invention has been described by reference to an engine with two intake and two exhaust valves per cylinder, this is not an essential feature of the invention and it can be applied with other valve configurations.

## Claims

1. A spark ignition internal combustion engine having a variable volume combustion chamber (10) defined by a cylinder head (12), a cylinder bore (14) and a piston (16) reciprocating within the cylinder bore (14), the cylinder head (12) having a spark plug (40) and intake and exhaust ports (20,30) leading through intake and exhaust valves (26,36) into the combustion chamber (10), the engine also having a fuel supply for producing a substantially homogeneous premixed charge of fuel and air in the combustion chamber towards the end of the compression stroke, **characterised in that** means are provided to produce a powerful ignition kernel for igniting the premixed charge, the means comprising a fuel injector (50) for injecting liquid fuel directly into the combustion chamber (10), the fuel injector (50) being positioned in an unswept part of the cylinder bore (14) and oriented to spray fuel obliquely towards the front face of an intake valve (26) when the intake valve is closed such that the fuel is deflected from or along the surface of the intake valve (26) in the direction of the spark plug (40), and an engine management system (60) for generating a spark at the spark plug electrodes at a predetermined spark timing in the engine cycle, and for operating the fuel injector (50) in a predetermined prior phase relationship with the spark timing to direct towards the vicinity of the spark plug electrodes a small quantity of fuel only sufficient to generate at the time of spark a localised region of readily ignitable mixture having its centre in the immediate vicinity of the spark plug electrodes, the resulting ignition of the localised ignitable region by the spark and the combustion thereof producing the powerful ignition kernel for igniting the premixed charge in the combustion chamber.

2. A spark ignition internal combustion engine as claimed in claim 1, wherein the fuel spray from the fuel injector (50) has a small conical angle and is directed at a shallow angle with the surface of the intake valve 26) such that sufficient air is entrained by the fuel droplets in close proximity of the surface and the spark plug (40) to form a compact and turbulent mixture cloud which burns rapidly once it is ignited to form a powerful ignition kernel.

3. A spark ignition internal combustion engine as claimed in claim 1 or 2, wherein the fuel supply for producing the homogeneous premixed charge in the combustion chamber comprises the same fuel injector (50) located in such a position that when fuel is sprayed into the combustion chamber (10) while the intake valve (26) is open during the intake stroke, the fuel spray passes through the mouth of the intake valve (26) against the flow of high velocity air leaving the intake valve and enters directly into the end of the intake port (20) penetrating laterally across the through-flow cross-section of the intake port.

4. A spark ignition internal combustion engine as claimed in claim 1 or 2, wherein the fuel supply for producing the homogeneous premixed charge in the combustion chamber comprises at least one additional fuel injector located either in the combustion chamber with its spray directed away from the spark plug or in an intake port leading to the combustion chamber, the additional fuel injector being operated to spray fuel into the intake air charge during the intake stroke or prior to the intake stroke to allow sufficient time for the fuel to mixed homogeneously with the intake air charge.

5. A method of operating a spark ignition internal combustion engine having a variable volume combustion chamber (10) defined by a cylinder head (12), a cylinder bore (14) and a piston (16) reciprocating within the cylinder bore (14), the cylinder head (12) having a spark plug (40) and intake and exhaust ports (20,30) leading through intake and exhaust valves (26,36) into the combustion chamber (10), the engine also having a fuel supply for producing a substantially homogeneous premixed charge of fuel and air in the combustion chamber towards the end of the compression stroke, and a fuel injector (50) for injecting liquid fuel directly into the combustion chamber positioned in an unswept part of the cylinder bore (14) and oriented to spray fuel obliquely towards the front face of an intake valve (26) when the intake valve is closed such that the fuel is deflected from or along the surface of the intake valve in the direction of the spark plug (40), the method being **characterised in that** a small quantity of fuel that is only sufficient to generate at the time of ignition a localised region of readily ignitable mixture in the immediate vicinity of the spark plug (40) is injected by means of the said injector (50) in a predetermined prior phase relationship with the engine spark timing, the resulting ignition and combustion of the localised ignitable region producing a powerful ignition kernel for igniting the premixed charge in the combustion chamber.

6. A method as claimed in claim 5, wherein the combined timings of the injection of the small quantity of fuel and of the spark are selected such that the ignition timing is optimised for best engine thermodynamic efficiency.

7. A method as claimed in claim 5, wherein the combined timings of the injection of the small quantity of fuel and of the spark are selected such that the ignition timing is optimised for maximum exhaust gas temperature.

8. A method as claimed in claim 5, wherein the combined timings of the injection of the small quantity of fuel and of the spark are selected such that the ignition timing is advanced to such an extent as to cause autoignition in the remaining charge.

## Patentansprüche

1. Ein Funkenzündungs-Verbrennungsmotor, der eine von einem Zylinderkopf (12), einer Zylinderbohrung (14) und einem sich in der Zylinderbohrung (14) hin- und herbewegenden Kolben (16) begrenzte Verbrennungskammer variablen Volumens (10) besitzt, wobei der Zylinderkopf (12) eine Zündkerze (40) und durch Einlaß- und Auslaßventile (26, 36) in die Verbrennungskammer (10) führende Einlaß- und Auslaßöffnungen (20, 30) aufweist, und der Motor außerdem eine Kraftstoffversorgung zur Erzeugung einer im wesentlichen homogenen Vormischladung aus Kraftstoff und Luft in der Verbrennungskammer gegen Ende des Verdichtungshubes aufweist; **dadurch gekennzeichnet daß** Vorrichtungen bereitgestellt werden um zur Zündung der vorgemischten Ladung einen kraftvollen Zündungskern zu erzeugen, wobei die Vorrichtungen eine Kraftstoffeinspritzung (50) zur Einspritzung flüssigen Kraftstoffes direkt in die Verbrennungskammer (10) hinein umfaßt, die Kraftstoffeinspritzung (50) in einem nicht bestrichenen oder nicht gewischten Teil der Zylinderbohrung (14) positioniert und ausgerichtet ist, um Kraftstoff schräg gegen die Frontseite des Einlaßventils (26) zu sprühen wenn das Einlaßventil geschlossen ist; derart, daß der Kraftstoff von oder entlang der Oberfläche des Einlaßventils (26) in Richtung auf die Zündkerze (40) abgelenkt wird; und ein Motormanagement-System (60) zur Erzeugung eines Funkens an den Zündkerzen-Elektroden zu einem vorherbestimmten Zündzeitpunkt im Motorzyklus, und um die Kraftstoffeinspritzung (50) in einer vorherbestimmten Vorphasen-Beziehung mit der Zündungseinstellung zu betätigen; um eine kleine Kraftstoffmenge in Richtung auf die Zündkerzen-Elektroden zu lenken, die nur ausreicht um zum Zeitpunkt der Zündung einen lokalisierten Bereich einer leicht zündbaren Mischung zu erzeugen, der sein Zentrum in der unmittelbaren Nähe der Zünkerzen-Elektroden hat; wobei die resultierende Zündung des lokalisierten, zündfähigen Bereiches durch den Zündfunken und die Verbrennung hiervon den kraftvollen Zündungskern zur Zündung der vorgemischten Ladung in der Verbrennungskammer erzeugt.

2. Einen Funkenzündungs-Verbrennungsmotor gemäß Anspruch 1, in dem der Kraftstoff-Sprühnebel aus der Kraftstoffeinspritzung (50) einen kleinen konischen Winkel aufweist und derart in einem flachen Winkel auf die Oberfläche des Einlaßventiles (26) gerichtet wird, daß durch die Kraftstofftröpfchen in unmittelbarer Nähe der Oberfläche und der Zündkerze (40) ausreichend Luft mitgerissen wird, um eine kompakte und turbulente Mischungswolke zu bilden, welche - einmal gezündet - schnell verbrennt, um einen kraftvollen Zündungskern zu bilden.

3. Einen Funkenzündungs-Verbrennungsmotor gemäß Anspruch 1 oder 2, in dem die Kraftstoffversorgung zur Erzeugung der homogenen, vorgemischten Ladung in der Verbrennungskammer dies gleiche Kraftstoffeinspritzung (50) umfaßt; in derartiger Position angeordnet, daß der Kraftstoff-Sprühnebel-wenn Kraftstoff in die Verbrennungskammer (10) eingespritzt wird, während das Einlaßventil (26) während des Ansaughubes geöffnet ist - gegen den das Einlaßventil verlassenden Strom von Luft mit hoher Geschwindigkeit durch den Mund des Einlaßventiles (26) passiert und direkt in das Ende der Einlaßöffnung (20) eintritt, um lateral durch den DurchflußQuerschnitt der Einlaßöffnung zu dringen.

4. Ein Funkenzündungs-Verbrennungsmotor gemäß Anspruch 1 oder 2, in dem die Kraftstoffversorgung zur Erzeugung der homogenen, vorgemischten Ladung in der Verbrennungskammer mindestens eine zusätzliche Kraftstoffeinspritzung umfaßt; angeordnet entweder in der Verbrennungskammer, wobei ihr Sprühnebel von der Zündkerze weg oder in eine zu der Verbrennungskammer führende Einlaßöffnung gerichtet ist, und die zusätzliche Kraftstoffeinspritzung betrieben wird um während des Ansaughubes oder vor dem Ansaughub Kraftstoff in die Ansaug-Luftladung hinein einzuspritzen, um dem Kraftstoff ausreichend Zeit zu lassen um homogen mit der Ansaug-Luftladung gemischt zu werden.

5. Ein Verfahren zum Betrieb eines Funkenzündungs-Verbrennungsmotors, der eine von einem Zylinderkopf (12), einer Zylinderbohrung (14) und einem sich in der Zylinderbohrung (14) hin- und herbewegenden Kolben (16) begrenzte Verbrennungskammer variablen Volumens (10) besitzt, wobei der Zylinderkopf (12) eine Zündkerze (40) und durch Einlaß- und Auslaßventile (26, 36) in die Verbrennungskammer (10) führende Einlaß- und Auslaßöffnungen (20, 30) aufweist, und der Motor außerdem eine Kraftstoffversorgung zur Erzeugung einer im wesentlichen homogenen Vormischladung aus Kraftstoff und Luft in der Verbrennungskammer gegen Ende des Verdichtungshubes aufweist; und eine Kraftstoffeinspritzung (50) zur Einspritzung flüssigen Kraftstoffes direkt in die Verbrennungskammer hinein, die in einem nicht bestrichenen oder nicht gewischten Teil der Zylinderbohrung (14) positioniert und so ausgerichtet ist, um Kraftstoff schräg auf die Frontseite des Einlaßventils (26) hin zu sprühen wenn das Einlaßventil geschlossen ist; derart, daß der Kraftstoff von oder entlang der Oberfläche des Einlaßventils in Richtung auf die Zündkerze (40) abgelenkt wird; wobei das Verfahren **dadurch gekennzeichnet ist, daß** eine kleine Kraftstoffmenge - die nur ausreichend ist um zum Zeitpunkt der Zündung einen lokalisierten Bereich leicht zündbarer Mischung in der unmittelbaren Nähe der Zündkerze (40) zu erzeugen- mittels dieser Einspritzung (50) in einer vorherbestimmten Vorphasen-Beziehung mit der Motorzündung eingespritzt wird; und wobei die resultierende Zündung und Verbrennung des lokalisierten, zündbaren Bereiches einen kräftigen Zündungskern zur Zündung der Vormischladung in der Verbrennungskammer erzeugt.

6. Ein Verfahren gemäß Anspruch 5, in dem die kombinierten zeitlichen Steuerungen für die Einspritzung der kleinen Kraftstoffmenge und der Zündung derart gewählt sind, daß der Zündzeitpunkt für den besten thermodynamischen Wirkungsgrad optimiert ist.

7. Ein Verfahren gemäß Anspruch 5, in dem die kombinierten zeitlichen Steuerungen für die Einspritzung der kleinen Kraftstoffmenge und der Zündung derart gewählt sind, daß der Zündzeitpunkt für maximale Abgastemperatur optimiert ist.

8. Ein Verfahren gemäß Anspruch 5, in dem die kombinierten zeitlichen Steuerungen für die Einspritzung der kleinen Kraftstoffmenge und der Zündung derart gewählt sind, daß der Zündzeitpunkt um ein solches Ausmaß vorverlegt wird, um in der verbleibenden Ladung Selbstzündung zu verursachen.

## Revendications

1. Moteur à combustion interne à allumage par étincelle comportant une chambre de combustion à volume variable (10) définie par une culasse (12), un alésage de cylindre (14) et un piston (16) allant et venant à l'intérieur de l'alésage de cylindre (14), la culasse (12) comportant une bougie d'allumage (40) ainsi que des orifices d'admission et d'échappement (20, 30) conduisant par l'intermédiaire de soupapes d'admission et d'échappement (26, 36) dans la chambre de combustion (10), le moteur comportant également une alimentation en carburant destinée à produire une charge prémélangée pratiquement homogène de carburant et d'air dans la chambre de combustion vers la fin de la course de compression, **caractérisé en ce que** des moyens sont prévus pour produire un noyau d'allumage puissant destiné à allumer la charge prémélangée, les moyens comprenant un injecteur de carburant (50) destiné à injecter du carburant liquide directement dans la chambre de combustion (10), l'injecteur de carburant (50) étant positionné dans une partie non balayée de l'alésage de cylindre (14) et orienté afin de pulvériser le carburant de manière oblique vers la face avant d'une soupape d'admission (26) lorsque la soupape d'admission est fermée de telle sorte que le carburant soit dévié de la surface de la soupape d'admission (26) ou le long de celle-ci dans la direction de la bougie d'allumage (40), et un système de gestion de moteur (60) destiné à générer une étincelle au niveau des électrodes de la bougie d'allumage à un calage de l'étincelle prédéterminé du cycle du moteur, et destiné à mettre en oeuvre l'injecteur de carburant (50) dans une relation de phase antérieure prédéterminée avec le calage de l'étincelle en vue de diriger vers le voisinage des électrodes de la bougie d'allumage une petite quantité de carburant juste suffisante pour générer à l'instant de l'étincelle une région localisée de mélange facilement inflammable ayant son centre dans le voisinage immédiat des électrodes de la bougie d'allumage, l'allumage résultant de la région inflammable localisée par l'étincelle et la combustion de celle-ci produisant le noyau d'allumage puissant destiné à allumer la charge prémélangée dans la chambre de combustion.

2. Moteur à combustion interne à allumage par étincelle selon la revendication 1, dans lequel le brouillard de carburant provenant de l'injecteur de carburant (50) présente un petit angle conique et est dirigé à un angle peu prononcé avec la surface de la soupape d'admission (26), de sorte que suffisamment d'air est entraîné par les gouttelettes de carburant à proximité étroite de la surface et de la bougie d'allumage (40) pour former un nuage de mélange compact et turbulent qui brûle rapidement une fois qu'il est allumé afin de former un noyau d'allumage puissant.

3. Moteur à combustion interne à allumage par étincelle selon la revendication 1 ou 2, dans lequel l'alimentation en carburant destinée à produire la charge prémélangée homogène dans la chambre de combustion comprend le même injecteur de carburant (50) situé dans une position telle que lorsque le carburant est pulvérisé dans la chambre de combustion (10) pendant que la soupape d'admission (26) est ouverte durant la course d'admission, le brouillard de carburant passe au travers de l'ouverture de la soupape d'admission (26) en s'opposant à l'écoulement de l'air à grande vitesse quittant la soupape d'admission et pénètre directement jusque dans l'extrémité de l'orifice d'admission (20) en pénétrant latéralement au travers de la section transversale d'écoulement traversant de l'orifice d'admission.

4. Moteur à combustion interne à allumage par étincelle selon la revendication 1 ou 2, dans lequel l'alimentation en carburant destinée à produire la charge prémélangée homogène dans la chambre de combustion comprend au moins un injecteur de carburant supplémentaire situé soit dans la chambre de combustion avec son brouillard dirigé à l'écart de la bougie d'allumage soit dans un orifice d'admission conduisant à la chambre de combustion, l'injecteur de carburant supplémentaire étant mis en oeuvre pour pulvériser du carburant dans la charge d'air d'admission pendant la course d'admission ou avant la course d'admission afin de permettre un temps suffisant pour que le carburant se mélange de façon homogène avec la charge d'air d'admission.

5. Procédé de mise en oeuvre d'un moteur à combustion interne à allumage par étincelle comportant une chambre de combustion à volume variable (10) définie par une culasse (12), un alésage de cylindre (14) et un piston (16) allant et venant à l'intérieur de l'alésage de cylindre (14), la culasse (12) comportant une bougie d'allumage (40) ainsi que des orifices d'admission et d'échappement (20, 30) conduisant par l'intermédiaire de soupapes d'admission et d'échappement (26, 36) dans la chambre de combustion (10), le moteur comportant également une alimentation en carburant destinée à produire une charge prémélangée pratiquement homogène de carburant et d'air dans la chambre de combustion vers la fin de la course de compression, et un injecteur de carburant (50) destiné à injecter du carburant liquide directement dans la chambre de combustion positionné dans une partie non balayée de l'alésage de cylindre (14) et orienté pour pulvériser du carburant de façon oblique vers la face avant d'une soupape d'admission (26) lorsque la soupape d'admission est fermée de sorte que le carburant soit dévié de la surface de la soupape d'admission ou le long de celle-ci dans la direction de la bougie d'allumage (40), le procédé étant **caractérisé en ce qu'**une petite quantité de carburant qui est juste suffisante pour générer à l'instant de l'allumage une région localisée de mélange facilement inflammable au voisinage immédiat de la bougie d'allumage (40) est injectée au moyen dudit injecteur (50) dans une relation de phase préalable prédéterminée avec le calage de l'étincelle du moteur, l'allumage et la combustion résultants de la région inflammable localisée produisant un noyau d'allumage puissant destiné à allumer la charge prémélangée dans la chambre de combustion.

6. Procédé selon la revendication 5, dans lequel les synchronisations combinées de l'injection de la petite quantité de carburant et de l'étincelle sont sélectionnées de sorte que le calage de l'allumage soit optimisé pour le meilleur rendement thermodynamique du moteur.

7. Procédé selon la revendication 5, dans lequel les synchronisations combinées de l'injection de la petite quantité de carburant et de l'étincelle sont sélectionnées de sorte que le calage de l'allumage soit optimisé pour une température de gaz d'échappement maximum.

8. Procédé selon la revendication 5, dans lequel les synchronisations combinées de l'injection de la petite quantité de carburant et de l'étincelle sont sélectionnées de sorte que le calage de l'allumage soit avancé jusqu'au point de provoquer un auto-allumage de la charge restante.
